**Europäisches Patentamt**

**European Patent Office**

**Office européen des brevets**

(19)

(11) Veröffentlichungsnummer : **0 191 317**
**B1**

(12) # EUROPÄISCHE PATENTSCHRIFT

(45) Veröffentlichungstag der Patentschrift :
**11.01.89**

(21) Anmeldenummer : **86100719.3**

(22) Anmeldetag : **21.01.86**

(51) Int. Cl.⁴ : **B 60 H   1/00**, H 01 C   1/08

(54) Anordnung zum Erfassen der Raumtemperatur in einem Fahrzeug.

(30) Priorität : **13.02.85 DE 3504842**

(43) Veröffentlichungstag der Anmeldung :
**20.08.86 Patentblatt 86/34**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**EP--A-- 0 042 287**
**DE--A-- 2 531 015**
**DE--A-- 3 109 840**

(73) Patentinhaber : **ROBERT BOSCH GMBH**
**Postfach 50**
**D-7000 Stuttgart 1 (DE)**

(72) Erfinder : **Nolting, Peter, Dipl.-Ing.**
**Scheffelweg 24**
**D-7582 Bühlertal (DE)**

EP 0 191 317 B1

## Beschreibung

### Stand der Technik

Die Erfindung betrifft eine Anordnung zum Erfassen der Raumtemperatur in einem Fahrzeug nach der Gattung des Hauptanspruchs. Es sind schon solche Anordnungen bekanntgeworden (z. B. DE-OS 25 31 015), bei denen unbelüftete oder durch örtliches Ansaugen mittels Sauggebläse, Strahldüse oder Saugrohrunterdruck von Raumluft zwangsbelüftete Innenfühler eingesetzt sind. Ein unbelüfteter Fühler und auch ein durch örtliches Ansaugen belüfteter Fühler haben den Nachteil, daß die Regelung nach einem zu eng begrenzten Bereich des Fahrzeuginnenraums erfolgt. Eine wirksame, das Wohlbefinden der im Fahrzeuginnenraum befindlichen Menschen fördernde Regelung erfordert mehrere, auf den gesamten Innenraum verteilte Fühler. Zudem erfordern die belüfteten Fühler ein kompliziertes, mit Unterdruckanschluß versehenes Gehäuse. Das alles verteuert eine solche Anordnung erheblich.

### Vorteile der Erfindung

Die erfindungsgemäße Anordnung mit den kennzeichnenden Merkmalen des Hauptanspruchs hat demgegenüber den Vorteil, daß der Temperaturfühler durch den mit Abstand von ihm angeordneten Lüfter so angeblasen wird, daß auch Raumluft aus der Umgebung des Luftstromes in diesen gemischt wird. Dadurch wird eine gute Raumtemperaturinformation gegeben, die zusätzliche Temperaturfühler an anderer Stelle überflüssig macht.

Durch die in den Unteransprüchen aufgeführten Maßnahmen sind vorteilhafte Weiterbildungen und Verbesserungen der im Hauptanspruch angegebenen Anordnung möglich. Besonders vorteilhaft ist die weitere Verbesserung der Raumtemperaturinformation durch Ansaugen von Luft aus einem gezielt ausgewählten Raumbereich, beispielsweise dem vorderen Fußraum.

### Zeichnung

Drei Ausführungsbeispiele der Erfindungsgegenstandes sind in der Zeichnung dargestellt und in der nachfolgenden Beschreibung näher erläutert. Es zeigen Figur 1 eine perspektivische Darstellung einer ersten Ausführungsform, Figur 2 eine vereinfachte Seitenansicht einer zweiten Ausführungsform und Figur 3 eine vereinfachte Seitenansicht einer dritten Ausführungsform.

### Beschreibung der Ausführungsbeispiele

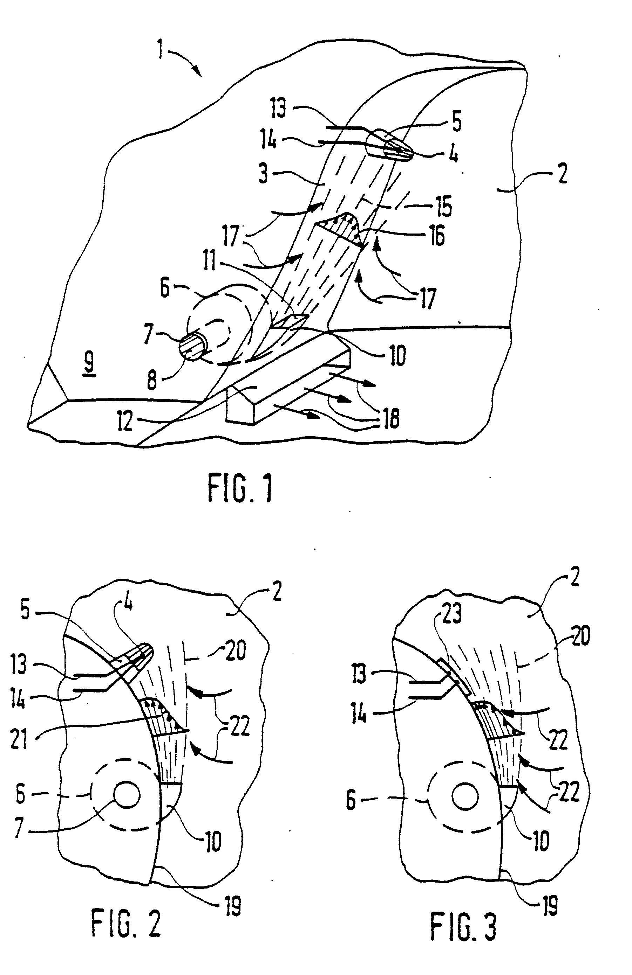

Im Ausführungsbeispiel gemäß Figur 1 ist in einem Fahrzeug 1 mit einem Innenraum 2 eine Mittelkonsole 3 angeordnet.

Im oberen Teil dieser Mittelkonsole 3 ist ein Temperaturfühler 4 befestigt. Er ist aufgenommen von einem Gehäuse 5, das einen massiven Sockel und einen mit Schlitzen versehenen Oberteil hat. Der mit Schlitzen versehene Oberteil kann so gut von Luft durchströmt werden, die auch den in ihm angebrachten Temperaturfühler überstreicht. Im unteren Teil der Mittelkonsole 3 ist ein Lüfter 6 gelagert. Dessen Ansaugstutzen 7 hat seine Ansaugöffnung 8 im vorderen linken Fußraum 9 des Innenraumes 2. Ein Ausblasschacht 10 des Lüfters 6 ragt durch die Vorderwand der Mittelkonsole 3 hindurch, wobei seine Austrittsöffnung 11 zum Temperaturfühler 4 hin ausgerichtet ist. Der Ausblasschacht 10 ist oberhalb eines Schachtes 12 angeordnet, aus dem Heizungsluft austreten kann. Der Ausblasschacht 10 befindet sich also in einem lufttoten Raum, der oberhalb des Schachtes 12 durch das Ausströmen der Heizungsluft entsteht. Anschlußdrähte 13 und 14 für den Temperaturfühler 4 führen zu einer an sich bekannten Regeleinrichtung. In einen Luftstrom 15, der aus der Austrittsöffnung 11 austreten kann, ist ein Diagramm 16 eingezeichnet, das die Luftverteilung in diesem Luftstrom 15 symbolisiert. Pfeile 17 symbolisieren die Umgebungsluft, die vom Luftstrom 15 mitgerissen wird und sich mit diesem vermischt. Der aus dem Schacht 12 austretende Heizluftstrom ist durch Pfeile 18 symbolisiert.

Der Lüfter 6 saugt also Luft aus dem Fußraum 9 an, deren Temperatur der Temperatur des Luftstromes 15 entspricht. Diesem Luftstrom zugemischte Luft aus der Umgebung des Luftstromes 15 verändert die Temperatur des Luftstromes 15 entsprechend. Somit gelangt Luft aus dem vorderen Fußraum 9 und aus dem mittleren Bereich des Innenraumes 2 zum Temperaturfühler 4. Daraus ergibt sich eine gute Gesamtinformation.

Im Ausführungsbeispiel nach Figur 2 ist der gleiche Lüfter 6 innerhalb eines Armaturenbrettes 19 angeordnet. Dieses Armaturenbrett 19 hat eine zum Innenraum 2 hin gekrümmte Oberfläche. Der aus dem Armaturenbrett 19 herausragende Ausblasschacht 10 ist nach oben gerichtet und kann einen Luftstrom 20 abgeben. Infolge einer bestehenden, physikalischen Gesetzmäßigkeit folgt dieser Luftstrom 20 der gekrümmten Oberfläche des Armaturenbrettes 19. Es ergibt sich eine Luftverteilung in diesem Luftstrom 20 wie sie durch ein Diagramm 21 symbolisiert ist. Die sich diesem Luftstrom 20 hinzumischende Umgebungsluft ist durch Pfeile 22 symbolisiert. In dem Luftstrom 20 ist oberhalb des Lüfters 6 der Temperaturfühler 4 auf der Oberfläche des Armaturenbrettes 19 befestigt. Es handelt sich hier um die gleiche Ausführung wie beim Ausführungsbeispiel gemäß Figur 1. Die Ansaugluft für den Lüfter 6 kann mittels eines auf den Ansaugstutzen 7 aufgesteckten, hier nicht näher dargestellten Schlauches an verschiedenen Stellen des Innenraumes 2 gezielt entnommen werden. Vorzugsweise wird diese Stelle hier unterhalb des Lüfters 6 liegen. Die Wirkungsweise des Ausführungsbeispiels nach Figur 2 entspricht, abgesehen von der Besonderheit, daß der Luftstrom 20 der gekrüm-

ten Oberfläche des Armaturenbrettes 19 folgt, der des Ausführungsbeispiels 1.

Das Ausführungsbeispiel gemäß Figur 3 entspricht weitgehend dem gemäß Figur 2. Es ist lediglich anstelle des Temperaturfühlers 4 ein flacher Temperaturfühler 23 verwendet. Der Träger dieses Temperaturfühlers 23 ist vorzugsweise flexibel und mit einer selbstklebenden Oberfläche ausgestattet. Auch hier sind die Anschlußdrähte 13 und 14 verwendet. Selbstverständlich ist es auch möglich den Temperaturfühler 23 entgegen der hier gezeigten Ausführung nicht auf der Oberfläche des Armaturenbrettes 19 anzuordnen sondern von innen her an einer dünnen, wärmeleitenden Außenhaut des Armaturenbrettes 19 zu befestigen. Dabei würde dann die Erwärmung dieser Außenhaut des Armaturenbrettes 19 vom Temperaturfühler 23 erfaßt.

**Patentansprüche**

1. Anordnung zum Erfassen der Raumtemperatur in einem Fahrzeug zwecks Regelung dieser Raumtemperatur mit einem einen Luftstrom messenden Temperaturfühler (4, 23), dadurch gekennzeichnet, daß der Temperaturfühler (4, 23) im Fahrzeuginnenraum (2) so von einem mit Abstand von ihm angeordneten Lüfter (6) angeblasen wird, daß dem vom Lüfter (6) erzeugten Luftstrom (15, 20) Raumluft (17) aus der Umgebung des Luftstroms (15, 20) zugemischt wird.

2. Anordnung nach Anspruch 1, dadurch gekennzeichnet, daß der Luftstrom (15) frei auf den Temperaturfühler (4) gerichtet ist.

3. Anordnung nach Anspruch 1, dadurch gekennzeichnet, daß der Luftstrom (20) als Wandstrahl einer gekrümmten Oberfläche (19) folgend, am Temperaturfühler (4, 23) vorbeigeleitet ist.

4. Anordnung nach Anspruch 1, dadurch gekennzeichnet, daß der Temperaturfühler (4) in einem mit Durchströmöffnungen versehenen Körper (5) angeordnet ist.

5. Anordnung nach Anspruch 1, dadurch gekennzeichnet, daß der Temperaturfühler (23) in ein flexibles Bauteil eingebettet ist, das vorzugsweise mit einer selbstklebenden Fläche versehen ist.

6. Anordnung nach Anspruch 1, dadurch gekennzeichnet, daß der Lüfter (6) im Innenraum (2) des Fahrzeuges (1) vor dem direkten Einfluß der Außentemperatur geschützt, angeordnet ist.

7. Anordnung nach Anspruch 6, dadurch gekennzeichnet, daß der Lüfter (6) und/oder der Temperaturfühler (4) in einer Mittelkonsole (3) angeordnet ist.

8. Anordnung nach Anspruch 6, dadurch gekennzeichnet, daß der Lüfter (6) und/oder der Temperaturfühler (23) im Armaturenbrett (19) angeordnet sind.

9. Anordnung nach Anspruch 6, dadurch gekennzeichnet, daß die Ansaugöffnung (8) des Lüfters (6) im vorderen Fußraum (9) liegt.

10. Anordnung nach Anspruch 1, dadurch gekennzeichnet, daß die Ausblasöffnung (11) des Lüfters (6) in einem Totluftgebiet der aus der Fahrzeugheizung austretenden Warmluft (18) liegt.

11. Anordnung nach Anspruch 1, dadurch gekennzeichnet, daß der Lüfter (6) und der Temperaturfühler (4) auf einer gemeinsamen Platine angeordnet sind.

12. Anordnung nach Anspruch 1, dadurch gekennzeichnet, daß der Lüfter (6) und der Temperaturfühler (4, 23) voneinander getrennt im Innenraum (2) angeordnet sind.

**Claims**

1. Arrangement for recording the inside temperature in a vehicle in order to adjust this inside temperature having a temperature sensor (4, 23) measuring an air flow, characterized in that the temperature sensor (4, 23) in the vehicle interior (2) is ventilated by a blower (6) arranged at a distance therefrom in such a way that inside air (17) from the surroundings of the air flow (15, 20) is admixed with the air flow (15, 20) produced by the blower (6).

2. Arrangement according to Claim 1, characterized in that the air flow (15) is directed freely onto the temperature sensor (4).

3. Arrangement according to Claim 1, characterized in that the air flow (20) is led past the temperature sensor (4, 23) as a wall flow at along curved surface (19).

4. Arrangement according to Claim 1, characterized in that the temperature sensor (4) is arranged in a body (5) provided with through-flow openings.

5. Arrangement according to Claim 1, characterized in that the temperature sensor (23) is embedded in a flexible component, which is preferably equipped with a self-adhesive surface.

6. Arrangement according to Claim 1, characterized in that the blower (6) is arranged in the interior (2) of the vehicle (1) in a manner protected from the direct effect of the external temperature.

7. Arrangement according to Claim 6, characterized in that the blower (6) and/or the temperature sensor (4) is (sic) arranged in a central console (3).

8. Arrangement according to Claim 6, characterized in that the blower (6) and/or the temperature sensor (23) are (sic) arranged in the dashboard (19).

9. Arrangement according to Claim 6, characterized in that the suction opening (8) of the blower (6) lies in the front foot well (9).

10. Arrangement according to Claim 1, characterized in that the blow-out opening (11) of the blower (6) lies in a dead air space of the warm air (18) emerging from the vehicle heater.

11. Arrangement according to Claim 1, characterized in that the blower (6) and the temperature sensor (4) are arranged on a common plate.

12. Arrangement according to Claim 1, characterized in that the blower (6) and the temperature sensor (4, 23) are arranged as separate from one another in the interior (2).

**Revendications**

1. Dispositif de mesure de la température de l'habitacle d'un véhicule pour la régulation de cette température d'habitacle, avec un capteur de température (4, 23) mesurant la température d'un courant d'air, caractérisé en ce que le capteur de température (4, 23) est soufflé dans l'habitacle du véhicule (2) par un ventilateur (6) disposé à distance du capteur, de sorte que de l'air de l'habitacle (17) dans l'environnement du courant d'air (15, 20) est mélangé au courant d'air (15, 20) produit par le ventilateur (6).

2. Dispositif suivant la revendication 1, caractérisé en ce que le courant d'air (15) est dirigé librement sur le capteur de température (4).

3. Dispositif suivant la revendication 1, caractérisé en ce que le courant d'air (20) suivant comme veine de paroi une surface courbe (19) est conduit devant le capteur de température (4, 23).

4. Dispositif suivant la revendication 1, caractérisé en ce que le capteur de température (4) est monté dans un corps (5) pourvu d'ouvertures d'écoulement.

5. Dispositif suivant la revendication 1, caractérisé en ce que le capteur de température (23) est inséré dans un composant flexible qui est préférentiellement pourvu d'une surface autocollante.

6. Dispositif suivant la revendication 1, caractérisé en ce que le ventilateur (6) est monté dans l'habitacle (2) du véhicule (1), protégé d'une influence directe de la température extérieure.

7. Dispositif suivant la revendication 6, caractérisé en ce que le ventilateur (6) et/ou le capteur de température (4) est monté dans une console centrale (3).

8. Dispositif suivant la revendication 6, caractérisé en ce que le ventilateur (6) et/ou le capteur de température (23) est monté dans le tableau de bord (19).

9. Dispositif suivant la revendication 6, caractérisé en ce que l'ouverture d'aspiration (8) du ventilateur (6) se trouve dans la partie avant de l'habitacle sous le tableau de bord.

10. Dispositif suivant la revendication 1, caractérisé en ce que l'ouverture de refoulement (11) du ventilateur (6) se trouve dans une zone d'air morte de l'air chaud (18) sortant du système de chauffage du véhicule.

11. Dispositif suivant la revendication 1, caractérisé en ce que le ventilateur (6) et le capteur de température (4) sont montés sur une platine.

12. Dispositif suivant la revendication 1, caractérisé en ce que le ventilateur (6) et le capteur de température (4, 23) sont disposés séparés l'un de l'autre dans l'habitacle (2).

FIG. 1

FIG. 2

FIG. 3